# EUROPÄISCHE PATENTSCHRIFT

(11) **EP 4 146 982 B1**
(45) Veröffentlichungstag und Bekanntmachung des Hinweises auf die Patenterteilung: **09.10.2024**
(21) Anmeldenummer: 21713914.6
(22) Anmeldetag: 18.03.2021
(51) Int. Cl.: F21V 8/00, F21V 13/00

(54) **LEUCHTVORRICHTUNG, LEUCHTSYSTEM SOWIE KRAFTFAHRZEUG MIT LEUCHTSYSTEM**
LIGHTING DEVICE, LIGHTING SYSTEM, AND MOTOR VEHICLE WITH LIGHTING SYSTEM
DISPOSITIF D'ÉCLAIRAGE, SYSTÈME D'ÉCLAIRAGE, ET VÉHICULE À MOTEUR À SYSTÈME D'ÉCLAIRAGE

(30) Priorität: 08.05.2020 DE 102020112574
(43) Veröffentlichungstag der Anmeldung: 15.03.2023
(73) Patentinhaber: Audi AG, 85045 Ingolstadt (DE)
(72) Erfinder: TONTSCH, Friedrich-Uwe, 85051 Ingolstadt (DE)
(74) Vertreter: Hofstetter, Schurack & Partner
(86) Internationale Anmeldenummer: PCT/EP2021/056895
(87) Internationale Veröffentlichungsnummer: WO 2021/223930

(56) Entgegenhaltungen:
- DE-A1- 102013 020 715
- DE-B4- 102013 020 715
- FR-A1- 2 936 592
- US-A- 4 234 907
- US-A- 5 042 900
- US-A- 5 709 448
- US-B2- 10 549 684

## Beschreibung

Die Erfindung betrifft eine Leuchtvorrichtung für ein Kraftfahrzeug. Die Leuchtvorrichtung umfasst mehrere optische Fasern und mehrere weitere Fasern, die zu einem zweidimensionalen Fasergewebe verwebt sind. Ferner betrifft die Erfindung ein Leuchtsystem sowie ein Kraftfahrzeug mit einem derartigen Leuchtsystem.

Optische Fasern, die Licht von einer Lichtquelle verlustarm entlang ihrer Längs- oder Faserrichtung zu einem Zielort transportieren können, bieten zahlreiche vorteilhafte Möglichkeiten und Eigenschaften. Die optischen Fasern können insbesondere als polymer optische Fasern ausgebildet und beispielsweise mittels Spritzguss hergestellt sein. Sie finden in vielfältigen Anwendungsbereichen zunehmend Verwendung, beispielsweise für eine Leuchtvorrichtung eines Kraftfahrzeugs, die als eine Innen- und/oder Außenleuchte realisiert sein kann. Optische Fasern können verhältnismäßig dünn und unempfindlich gegenüber mechanischen Belastungen oder Beschädigungen sein, wodurch eine präzise und beschädigungsfreie Anordnung der optischen Fasern und Zusammenfügen zu einer handhabbaren Gruppe (z.B. als Fasergewebe) möglich ist. Hierbei ist ein Beschädigen der Faseroberfläche zu verhindern oder zu begrenzen, um späteren Licht- und Effizienzverlusten aufgrund von Streueffekten entgegenzuwirken.

Die US 2009/0291606 A1, die US 2006/0144460 A1 und die DE 601 17 825 T2 beschreiben jeweils ein Gewebe, das optische Fasern in Kett- und/oder Schussrichtung umfassen kann.

Die US 5 709 448 A offenbart ein Leuchteinheit für einen Fahrzeugrücksitz, wobei hierzu optische Fasern verwendet werden.

Die DE 11 2016 006 984 T5 offenbart eine Fahrzeugkomponente mit einem Beleuchtungssystem. Ähnliches geht aus der DE 10 2018 203 860 A1 hervor.

Die US 4 234 907 A offenbart einen lichtemittierenden Stoff bestehend aus optischen Fasern.

Die aus dem Stand der Technik bekannten Lösungen beschreiben jeweils ein optische Fasern umfassendes Gewebe, dessen zweidimensionale Form lediglich nur geringfügig veränderbar ist.

Aufgabe der vorliegenden Erfindung ist es, eine besonders einfache und hinsichtlich einer nutzbaren Lichtausbeute besonders effiziente Anordnung und Verwendung von definiert ausgerichteten optischen Fasern bei möglichst geringem Bauraumbedarf zu ermöglichen.

Diese Aufgabe wird erfindungsgemäß durch die Gegenstände der unabhängigen Patentansprüche gelöst. Vorteilhafte Ausgestaltungen und Weiterbildungen der vorliegenden Erfindung sind in den abhängigen Patentansprüchen, in der Beschreibung und in den Figuren angegeben.

Der Erfindung liegt die Erkenntnis zugrunde, dass eine Lichtinszenierung, insbesondere in einem Innenraum eines Kraftfahrzeugs an Bedeutung zunimmt. Um einen Bauraumbedarf gering zu halten, kann für eine flächig ausgebildete Leuchtvorrichtung beispielsweise ein oberflächenstrukturiertes Fasergewebe (Fasermatte) verwendet werden, die neben einer verhältnismäßig flachen Anordnung (Package) von optischen Fasern auch eine von den Fasern abweichende Verortung einer Leuchteinrichtung (Lichtquelle) in einem alternativen Bauraum zulässt. Somit kann relativ einfach eine leicht verformte zweidimensionale Struktur realisiert werden, z.B. eine Flächenbeleuchtung einer Tür oder einer Instrumententafel des Kraftfahrzeugs. Soll allerdings eine stark verformte Oberfläche eines dreidimensionalen Bauteils, z.B. ein Schalthebel, vollflächig beleuchtet werden, dann ist eine derartige flächige Beleuchtung beispielsweise aufgrund einer Größe des Bauteils bzw. dessen bereits integrierter Funktionalität ungeeignet. Insbesondere spritzgegossene Lichtleiter sind hinsichtlich ihrer Anordnung (Package), einer Art einer Einkopplung und einer Formgebung eingeschränkt. Denn hierzu wäre beispielsweise eine einen verfügbaren Bauraum überschreitende erhöhte Aufbauhöhe (beispielsweise aufgrund eines Überlappens) und eine über die Bruchfestigkeit hinausgehende Verformung der optischen Fasern erforderlich. Dem wird durch die Erfindung entgegengewirkt.

Durch die Erfindung ist eine Leuchtvorrichtung für ein Kraftfahrzeug bereitgestellt. Die Leuchtvorrichtung umfasst mehrere optischen Fasern und mehrere weiteren Fasern, wobei die mehreren weiteren Fasern als mehrere weitere optische Fasern oder als mehrere nichtoptische Fasern ausgebildet sind. Die mehreren optischen Fasern und/oder die mehreren weiteren optischen Fasern im Sinne der Erfindung beschreiben sogenannte als Lichtleiter ausgebildete Fasern zum Übertragen und/oder zum Führen von Licht. Derartige Fasern können polymere optische Fasern (Polymeric Optical Fiber oder POF) aus Kunststoff aber ebenso aus (Quarz-) Glasfasern oder dergleichen sein. Jede dieser Fasern umfasst einen lichttransportierenden Kern und einen den Kern umgebenden Mantel (Jacket). Der Mantel weist einen etwas niedrigeren Brechungsindex als der Kern auf, sodass aufgrund einer Totalreflexion an einer Grenzschicht zum Kern eine eingekoppelte Lichtstrahlung geführt wird. Der Mantel kann den Kern mechanisch von einer Beanspruchung von außen schützen. Eine Überbeanspruchung des Mantels, d.h. eine Beschädigung einer Faseroberfläche beispielsweise durch Kratzen, kann zu einem unerwünschten Lichtaustritt aufgrund von unterschiedlichen Brechungsindizes führen. Die Lichtstrahlung kann beispielsweise von einer LED-Lichtquelle in jede der optischen Fasern oder ein Faserbündel einkoppelt sein. Falls es sich bei den mehren weiteren Fasern um die mehreren nichtoptischen Fasern handelt, können diese beispielsweise aus einem Garen, aus Naturfasern, aus Kunstfasern oder dergleichen bestehen, also eine Faser oder ein Fasermaterial sein. Jede der Fasern kann beispielsweise einen Durchmesser zwischen 0,1 und 0,5 Millimeter, insbesondere zwischen 0,2 und 0,3 Millimeter, und/oder einen minimalen Biegeradius zwischen 1 und 5 Millimeter, insbesondere zwischen 1,5 und 2,5 Millimeter aufweisen.

Die mehreren optischen Fasern und die mehreren weiteren Fasern sind zu einem zweidimensionalen Fasergewebe verwebt. Somit können sie gemeinsam ein textiles Flächengebilde (Fasermatte) ausbilden, dass Kett- und Schussfäden umfasst. Dabei verlaufen die Kettfäden in einer Längsrichtung des Fasergewebes, d.h. parallel zu einer Gewebekante, und die Schussfäden in einer Querrichtung, d.h. parallel zu dem Geweberand. Die Kett- und die Schussfäden kreuzen sich auf einer von dem Fasergewebe umfassen Gewebefläche unter einem Winkel von genau oder annähernd 90 Grad, d.h. sie sind rechtwinkelig miteinander verkreuzt und verlaufen dabei über- und untereinander, sodass das Fasergewebe entsteht. Die Fertigung des Fasergewebes kann mittels einer maschinellen Webmaschine erfolgen. Insbesondere kann es sich bei dem Fasergewebe um ein Flachgewebe handeln. Das Fasergewebe kann beispielsweise eine maximale Dicke zwischen 0,5 und 1,0 Millimeter aufweisen. Alternativ oder zusätzlich kann das Fasergewebe auch als eine Maschenware (Strick- und/oder Wirkware) ausgebildet sein.

Es ist vorgesehen, dass das Fasergewebe entsprechend einer abgewickelten Oberfläche mehrerer Seiten eines vorgegebenen dreidimensionalen Körpers gebildet ist. Mit anderen Worten, stimmt eine Gewebefläche des Fasergewebes mit einer abgewickelten Oberfläche des Körpers überein. Der Körper kann insbesondere als ein Hohlkörper ausgebildet sein. Unter einer Abwicklung der Oberfläche im Sinne der Erfindung versteht man eine Ausbreitung der Oberfläche in einer Ebene derart, dass Längen (gemessen auf eine Originalfläche) erhalten bleiben. Somit kann die abgewickelte Oberfläche als Schablone beispielsweise ein sogenanntes Netz des Körpers (Körpernetz) oder dessen Auffaltung darstellen, wobei durch eine Aufwicklung des derart ausgebildeten Fasergewebes ein Modell des Körpers hergestellt werden kann. Zur Abwicklung kann beispielsweise ein 3D-CAD-System (z.B. SolidWorks) verwendet werden, das anhand einer Geometrie des Körpers nahezu automatisch die Abwicklung erstellen kann. Hier kann es beispielsweise erforderlich sein, eine entsprechende Biegeverkürzung, d.h. einen Korrekturabzug für eine Längung jeder der das Fasergewebe umfassenden mehreren optischen und/oder weiteren Fasern beim Biegeumformen zu berücksichtigen. Alternativ oder zusätzlich kann in die abgewickelte Oberfläche ein Skalierungsfaktor einberechnet sein, sodass das Fasergewebe bei der Aufwicklung geringfügig größer als der Körper ist und statt des Modells einen Überzug für den Körper bildet. Der Körper kann beispielsweise als ein Schalthebel in dem Kraftfahrzeug ausgebildet sein.

Um das entsprechend der abgewickelten Oberfläche gebildete Fasergewebe bereitzustellen, ist vorgesehen, dass das Fasergewebe durch ein Schneiden erzeugt ist. Somit ist das Fasergewebe teilweise oder vollständig in zumindest zwei Teile zerteilt, d.h. durchtrennt. Beispielsweise kann das Schneiden durch an sich bekannte Methoden und Werkzeuge realisiert sein, beispielsweise durch ein mechanisches Trennen mittels einer Schneideinrichtung (z.B. Rollmesser, Wasserstrahl), durch Anritzen und anschließendes Brechen und/oder eine Laserschneideinrichtung. Zusätzlich ist das derartig ausgebildete Fasergewebe durch ein selektives Auftrennen der miteinander verwebten mehreren optischen Fasern und der mehreren weiteren Fasern an einem distalen Schnittende des Fasergewebes erzeugt, sodass diese an einem Gewebeende aufgetrennt herausragen. Somit umfasst das Fasergewebe nach dem Schneiden das distale Schnittende, wobei ausgehend von diesem ein Bereich des Fasergewebes bis zum Gewebeende entwebt ist. Die entwebten Fasern treten somit aus dem Gewebeende heraus. Handelt es sich hierbei um unverwebte optische Fasern, können diese mit der Lichtquelle gekoppelt sein. Alternativ oder zusätzlich können unverwebte nichtoptische Fasern für eine mechanische Befestigung des Fasergewebes an dem Körper verwendet sein. Hierdurch ergibt sich der Vorteil, dass ein Herstellen des Fasergewebes unabhängig von der abgewickelten Oberfläche kostengünstig als Meterware erfolgen kann. Alternativ oder zusätzlich kann vorgesehen sein, dass zum Realisieren der abgewickelten Oberfläche das Schneiden und/oder das selektive Auftrennen zumindest teilweise durch ein entsprechendes Formweben (z.B. Rundweben) ergänzt oder ersetzt werden kann. Insbesondere bei einem Verzicht auf das Schneiden und/oder das selektive Auftrennen kann ohne einen derartigen Zwischenschritt das Modell und/oder der Überzug des Körpers aus dem Fasergewebe hergestellt werden.

Somit kann das Fasergewebe beim Verweben eine Rechtecksfläche aufweisen. Durch das Scheiden und das selektive Auftrennen wird des Fasergewebes gemäß der abgewickelte Oberfläche erzeugt. Die abgewickelte Oberfläche kann beispielsweise eine T- oder eine Kreuzform aufweisen. Dabei ist die abgewickelte Oberfläche kleiner als die Rechtecksfläche. Insbesondere ist die Rechteckfläche ein minimal umgebendes Rechteck der abgewickelten Oberfläche.

Hierdurch ergibt sich der Vorteil, dass das zweidimensionale Fasergewebe durch Falten das Modell des und/oder den Überzug für den dreidimensionalen Körper bereitstellen kann. Dabei kann auf ein Überlappen des Fasergewebes verzichtet und somit ein Aufbau entsprechend der Dicke des Fasergewebes von 0,5 bis 1,0 Millimeter realisiert werden.

Es ist vorgesehen, dass die aus dem Gewebeende ragenden mehreren optischen Fasern und/oder die als mehrere weitere optische Fasern ausgebildete mehreren weiteren Fasern zu dem Faserbündel gebündelt sind, also zusammengefasst sind. Während die Fasern vor diesem Bündeln, insbesondere in einen verwebten Zustand flach nebeneinanderliegen oder angeordnet sein können, also das zweidimensionale Fasergewebe bilden können, können sich die Fasern in dem Faserbündel nebeneinander und übereinander erstrecken. In dem Faserbündel können sich die Fasern also analog zu Litzen oder Einzelleitern eines Kabels erstrecken. Des Weiteren ist das Faserbündel mit einer Schutzhülle ummantelt. Hier ist also derjenige Bereich der Fasern, in dem diese gebündelt sind, mit einer Ummantelung umgeben oder eingehüllt. Diese Ummantelung kann beispielsweise als ein Gewebeschlauch (z.B. Schrumpfschlauch) oder dergleichen ausgebildet sein und um das Faserbündel herumgewickelt oder in Faserrichtung auf das Faserbündel aufgezogen oder aufgeschoben werden. Durch die Ummantelung ist vorteilhafterweise eine Oberfläche der in dem Faserbündel außenliegenden Fasern vor äußeren mechanischen Einflüssen und Beschädigungen geschützt und die Fasern werden in dem Faserbündel zusammengehalten. Zusätzlich weist das Faserbündel an einer Stirnseite ein Koppelelement zum Einkoppeln von Licht in das Faserbündel auf. Dazu kann beispielsweise die Lichtquelle an der Stirnseite positioniert sein. Um dabei Einkopplungs- oder Reflexionsverluste besonders vorteilhaft zu minimieren, können die gebündelten Fasern, also das Faserbündel, das Koppelelement umfassen. Das Koppelelement kann beispielsweise als ein Steckelement ausgebildet sein und insbesondere mittels einer federnd gelagerten zylindrischen Hülse zu Faseraufnahme (eine sogenannte Ferrule) realisiert sein. Die Hülse kann aus Metall, Kunststoff oder Keramik gefertigt sein, wobei diese und die eingelegten Fasern angeschliffen bzw. poliert sind. Alternativ kann das Koppelelement auch ein Spleißelement sein.

Um eine Leuchtvorrichtung mit einer besonders flexiblen Leuchtcharakteristik (z.B. Leuchtintensität, Leuchtfarbe) bereitzustellen, ist es vorgesehen, dass das entsprechend der abgewickelten Oberfläche gebildete Fasergewebe zumindest zwei voneinander unterschiedliche Leuchtbereiche aufweist. Diese Leuchtbereiche unterscheiden sich durch die Anzahl an Seiten, die jeweils das Faserbündel aufweisen. Somit ist dadurch vorgegeben, an wie vielen Seiten jeweils Licht in das Faserbündel einkoppelbar ist. Ein erster Leuchtbereich weist nur an einer der Seiten das Faserbündel mit dem Koppelelement auf. Somit ist der erste Leuchtbereich dazu ausgebildet, lediglich an der einen Seite Licht einzuleiten. Alternativ oder zusätzlich umfasst ein zweiter Leuchtbereich an zumindest zwei Seiten des Fasergewebes jeweils das Faserbündel mit dem Koppelelement. Zwei der zumindest zwei Seiten können einander gegenüberliegen. Dadurch ist Licht an zwei einander entgegengesetzten Seiten des Fasergewebes einkoppelbar. Somit ist eine Lichtleitung auch in umgekehrter Richtung durch die optischen Fasern möglich. Alternativ oder zusätzlich sind die zwei der zumindest zwei Seiten normal zueinander, d.h. rechtwinkelig angeordnet. Somit ist mittels des zweiten Leuchtbereichs das Licht von zwei, drei oder vier Seiten des Fasergewebes einkoppelbar. Erfindungsgemäß sind die zumindest zwei Leuchtbereiche selektiv mittels einer Steuereinrichtung ansteuerbar, sodass das Fasergewebe in sich homogen leuchtet.

Durch die Erfindung ist ein Leuchtsystem für ein Kraftfahrzeug bereitgestellt. Das Leuchtsystem umfasst eine Leuchtvorrichtung und einen dreidimensionalen Körper. Die Leuchtvorrichtung ist bevorzugt als eine Ausführungsform der erfindungsgemäßen Leuchtvorrichtung ausgebildet. Die Leuchtvorrichtung weist mehrere optische Fasern und mehrere weitere Fasern auf, die zu einem zweidimensionalen Fasergewebe verwebt sind. Dabei sind die mehreren weiteren Fasern als mehrere weitere optische Fasern oder als mehrere nichtoptische Fasern ausgebildet. Die mehreren optischen sowie die mehreren weiteren Faser und das Fasergewebe können wie bereits im Zusammenhang mit der erfindungsgemäßen Leuchtvorrichtung erörtert ausgebildet sein. Der Körper weist eine Oberfläche auf, die mehrerer Seiten des Körpers umfasst und den Körper zumindest teilweise begrenzt. Der Körper kann insbesondere als ein Hohlkörper ausgebildet sein. Somit umhüllt die Oberfläche zumindest bereichsweise den Körper und einen von diesem bereitgestellten Innenraum. Ferner ist das Fasergewebe entsprechend der abgewickelten Oberfläche des Körpers gebildet. Eine Abwicklung im Sinne der Erfindung ist bereits im Zusammenhang mit der erfindungsgemäßen Leuchtvorrichtung beschrieben. Hierdurch ergibt sich der Vorteil, dass das zweidimensionale Fasergewebe durch Falten ein Modell des und/oder einen Überzug für den dreidimensionalen Körper bereitstellen kann. Dabei kann ein überlappungsfreier Aufbau realisiert werden. Alternativ oder zusätzlich kann zumindest ein weiteres Fasergewebe vorliegen, sodass das Fasergewebe und das zumindest ein weiteres Fasergewebe jeweils ein Segment für das Modell und/oder den Überzug darstellen kann.

Eine vorteilhafte Ausführungsform sieht vor, dass das Fasergewebe zumindest teilweise an der Oberfläche des Körpers angeordnet ist, wobei hierbei das Fasergewebe eine Biegekante, einen Biegewinkel und/oder einen Biegeradius aufweist. Somit kann das Fasergewebe mittels Biegeumformen von einer flächigen zweidimensionalen Form in eine dreidimensionale überführt werden, Hierbei ist es erforderlich, eine relevante Ausprägung vorzugeben, die mittels der Biegekante, dem Biegewinkel und/oder dem Biegeradius definiert sein kann. Dadurch kann das Fasergewebe vorteilhafterweise reproduzierbar umgeformt sein. Hierbei kann es erforderlich sein, bei einer geplanten Biegung (und/oder Stauchung) eine Biegeverkürzung in der abgewickelten Oberfläche einzuberechnen. Alternativ oder zusätzlich stoßen mindestens zwei Kanten des Fasergewebes bündig aneinander. Somit ist jener Bereich, in welchem die zumindest zwei Kanten aneinander grenzen, überlappungsfrei ausgebildet. Die zumindest zwei Kanten können beispielsweise einen Stumpf- oder einen Eckstoß ausbilden. Dadurch kann besonders einfach der überlappungsfreie Aufbau bereitgestellt sein.

Die Erfindung sieht vor, dass das Fasergewebe eine partiell lichtdurchlässige Schutzschicht aufweist. Somit bedeckt die Schutzschicht das Fasergewebe an einer Faserfläche. Die Schutzschicht kann das Fasergewebe vorteilhaft gegen Einflüsse aus einer Umgebung schützen sowie eine haptische und/oder eine optische Eigenschaft des Fasergewebes verändern. Beispielsweise kann die Schutzschicht als eine Folie aus Metall (z.B. Aluminium) und/oder aus Kunststoff ausgebildet sein. Auch ein Lederwerkstoff (z.B. echtes Leder, Kunstleder, Lederfaserwerkstoff) oder ein Textilwerkstoff kann die Schutzschicht bilden. Um eine partielle Lichtdurchlässigkeit der Schutzschicht zu realisieren, kann die Schutzschicht selbst oder deren Einschlüsse zumindest bereichsweise eine Transmission von Lichtstrahlen zulassen, d.h. transparent für einen Durchgang der Lichtstrahlen sein. Erfindungsgemäß ist die Schutzschicht zumindest teilweise opak (d.h. vollständig oder erst ab einer gewissen Schichtdicke) und weist um Bereitstellen der partiellen Lichtdurchlässigkeit eine als Durchgangsöffnung und/oder als eine Sacköffnung ausgebildete Perforation auf.

Zusätzlich kann das derart angeordnete Fasergewebe mittels eines Fügematerials an der Oberfläche des Körpers befestigt, wobei zusätzlich die jeweiligen Fasern zueinander fixiert sind. Bei dem Fügematerial kann es sich um einen Klebstoff und/oder eine Gießmasse handeln, die jeweils chemisch und/oder physikalisch aushärtet. Das Fügematerial verbindet das Fasergewebe mit dem Körper sowie die jeweiligen Fasern zueinander durch OberFlächenhaftung (Adhäsion) und innerer Festigkeit (Kohäsion). Insbesondere kann das Fügematerial als ein durch Polymerisations-, Polyadditions- oder Polykondensationsreaktionen synthetisch hergestelltes Harz sein. Hierdurch ergibt sich der Vorteil, dass aufgrund einer flächigen Kraftübertragung eine gleichmäßige Kraftverteilung über eine gesamte Fügefläche erreicht und ein Beschädigen des Fasergewebes beim Befestigen durch ein z.B. Bohrloch für ein Befestigungselement (z.B. Niete und/oder Schraube) verhindert werden kann. Auch können durch das Fügemittel fertigungsbedingte Toleranzen des Körpers und/oder der Fasermatte ausgeglichen sein.

Die Erfindung sieht vor, dass der Körper ein Hohlkörper ist und die Oberfläche des Hohlkörpers eine Öffnung zu dem Innenraum des Hohlkörpers aufweist. Somit ist die Oberfläche des Hohlkörpers abschnittsweise unterbrochen, wobei der Innenraum durch die Öffnung hindurch von außen, d. h. einer Umgebung des Hohlkörpers, zugänglich ist. Die aus dem Gewebeende herausragenden mehreren optischen Fasern und/oder mehreren weiteren Fasern sind durch die Öffnung in Richtung des Innenraums des Hohlkörpers gebogen. Somit können beispielsweise selektiv aufgetrennte und daher frei liegende Fasern derart nach innen geklappt sein, dass diese einen Falz ausbilden können. Dadurch ragen auch die als Faserbündel gebündelten optischen Fasern in den Innenraum. Durch den Innenraum können die Faserbündel zu einer Einkoppeleinrichtung des Leuchtsystems geführt werden. Die Einkoppeleinrichtung kann beispielsweise als ein Lichtstrahlen emittierendes Halbleiterbauelement (Leuchtdiode oder LED, z.B. ein LED-Element, Micro-LED-Element und/oder RGB-LED-Element) oder eine sonstige Lichtquelle realisiert sein. Über ein Koppelelement ist das durch den Innenraum geführte Faserbündel mit der Einkoppeleinrichtung optisch leitend verbunden. Bei dem Koppelelement handelt es sich bevorzugt um ein bereits zuvor im Zusammenhang mit der erfindungsgemäßen Leuchtvorrichtung beschriebenes Koppelelement (z.B. Steck- und/oder Spleißelement). Durch eine derartige Anordnung und Führung der Fasern sind diese vor Umwelteinflüssen besonders geschützt. Zusätzlich kann eine räumliche Entfernung zwischen dem Fasergewebe und der Einkoppeleinrichtung einfach überwunden sein, wodurch eine Position der Einkoppeleinrichtung bauraumoptimiert festgelegt sein kann.

Eine vorteilhafte Ausführungsform sieht vor, dass jede der mehreren optischen Fasern und/oder jede der als mehrere weitere optische Fasern ausgebildeten mehreren weiteren optischen Fasern einen Kern und einen den Kern umhüllenden Überzug aufweist. Der Überzug kann einen unerwünschten Strahlungsverlust bei einem Lichttransport verhindern. Um die optischen Fasern zusätzlich auch als abstrahlende Elemente nutzen zu können, weist der Überzug eine Lücke auf. Hierbei handelt es sich bei der Lücke um eine gezielt eingebrachte Störung in einer Kern-Mantel-Grenzfläche. Dadurch kann eine seitliche Abstrahlung von Licht erzielt werden. Derartige optische Fasern werden auch als seitlich emittierende Fasern bezeichnet. Je nach Anordnung eines Bereichs mit intaktem Überzug (Totalreflexion) und eines Bereichs mit der Lücke in dem Überzug (Transmission von Lichts) kann ein charakteristisches Beleuchten des Fasergewebes erfolgen. Hierbei kann eine Ausprägung der Lücke selbst (z.B. Durchmesser) und/oder eine Anzahl an mehreren Lücken (z.B. Lückendichte). Die Lücke kann beispielsweise mittels Laserschneiden (Ablation) oder einem vergleichbaren Verfahren erzeugt werden. Die Lücke kann insbesondere nach einem Verweben und/oder Anordnen des Fasergewebes an der Oberfläche angebracht werden. Dabei ist die Lücke jeweils nur in einem Hebebereich des Fasergewebes angeordnet. Der Hebebereich beschreibt hierbei eine Ketthebung (d.h. wenn ein jeweiliger Kettfaden über dem jeweiligen Schussfaden liegt) und/oder eine Schusshebung (d.h. wenn ein jeweiliger Schussfaden über dem jeweiligen Kettfaden liegt). Der Hebebereich kann sich bei Anordnung des Fasergewebes an dem Körper an einer der Oberfläche entgegengesetzten Seite des Fasergewebes befinden. Dadurch kann besonders vorteilhaft sichergestellt sein, dass Licht nur in einem von außen sichtbaren Abschnitt des Fasergewebes emittiert ist.

Durch die Erfindung ist ein Kraftfahrzeug mit einem Leuchtsystem bereitgestellt. Das Leuchtsystem ist erfindungsgemäß als eine Ausführungsform der erfindungsgemäßen Leuchtsystems ausgebildet. Das Kraftfahrzeug ist bevorzugt als ein Kraftwagen, insbesondere als ein Personenkraftwagen oder ein Lastkraftwagen, oder als ein Personenbus oder ein Motorrad ausgestaltet. Das Kraftfahrzeug umfasst einen dreidimensionalen Körper, der als ein Verkleidungselement und/oder als ein Bedienelement in einem Innenraum des Kraftfahrzeugs angeordnet ist. Beispielsweise handelt es sich bei dem Bedienelement um einen Schalthebel oder ein Lenkrad. Mittels des Leuchtsystems kann insbesondere eine durchzuführende Aktion im Zusammenhang mit dem Betreibend des Kraftfahrzeugs (z.B. ein vorteilhafter Gangwechsel in Abhängigkeit von einer Drehzahl) und/oder eine aktuelle Einstellung (z.B. ein Fahrmodus oder ein gewählter Gang) dargestellt sein. Das Verkleidungselement kann beispielsweise eine Fahrzeugtür maskieren.

Die Erfindung umfasst auch die Kombinationen der Merkmale der beschriebenen Ausführungsformen.

Im Folgenden sind Ausführungsbeispiele der Erfindung beschrieben. Hierzu zeigt:
- Fig. 1: eine schematische Darstellung eines Kraftfahrzeugs;
- Fig. 2: eine schematische Darstellung eines Leuchtsystems für das Kraftfahrzeug; und
- Fig. 3: ein Flussdiagramm zum Bereitstellen des Leuchtsystems.

In den Figuren bezeichnen gleiche Bezugszeichen jeweils funktionsgleiche Elemente.

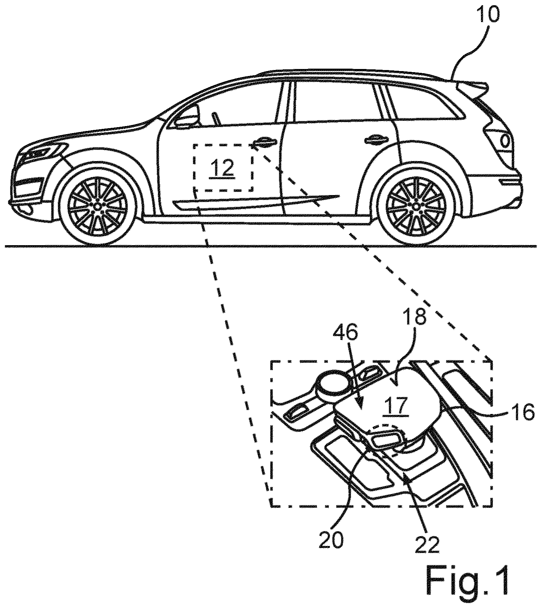

Die Fig. 1 zeigt beispielhaft ein Kraftfahrzeug 10, wobei ausschnittsweise ein Teil eines Innenraums 12 des Kraftfahrzeugs 10 vergrößert dargestellt ist. Dieser umfasst einen als Bedienelement ausgebildeten Wählhebel (Gangknüpel) 14. Der Wählhebel 14 ist somit ein dreidimensionaler Körper 16. Der Körper 16 ist als Hohlkörper ausgebildet und weist einen Innenraum 17 zur Aufnahme eines elektronischen Bauteils des Wählhebels 14 auf, der von mehreren Seiten einer Oberfläche 18 begrenzt ist und daher von außen für einen Beobachter (z.B. einen Fahrzeuginsassen) nicht einsehbar ist. Des Weiteren kann der Körper 16 eine schematisch angedeutet Öffnung 20 in der Oberfläche 18 aufweisen, durch welche hindurch beispielsweise das elektronische Bauteil gewartet oder ausgetauscht werden kann. Um den als Wählhebel 14 ausgebildeten Körper 16 zu beleuchten, beispielsweise um einen aktuell ausgewählten Gang (z.B. "P") optisch darzustellen, ist ein Leuchtsystem 22 vorgesehen.

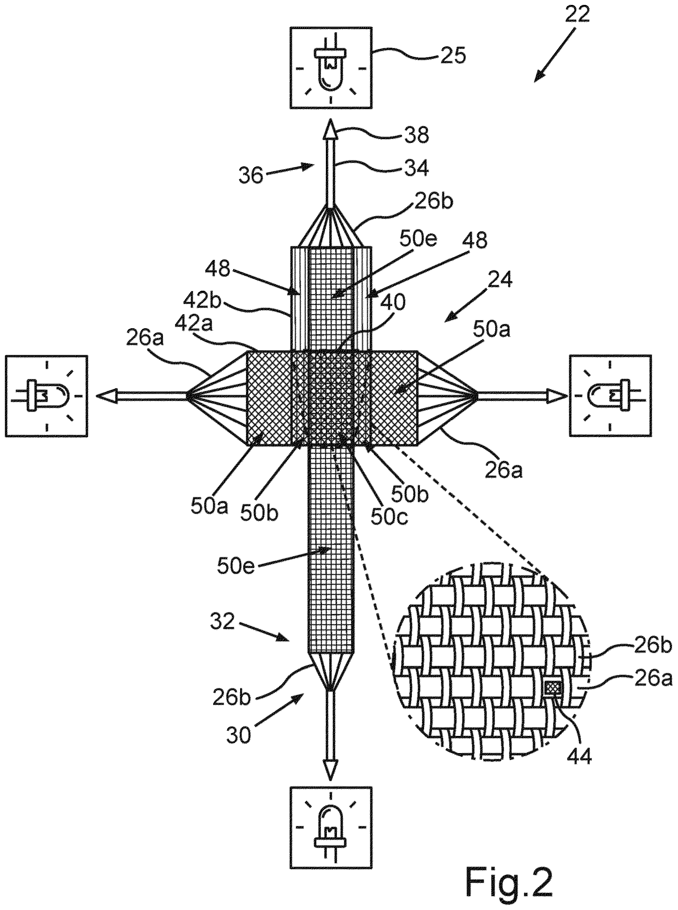

Das Leuchtsystem 22 und eine zugehörige Leuchtvorrichtung 24 sind detailliert in der in der Fig. 2 gezeigten Darstellung schematisch abgebildet, wobei die Fig. 2 Bezug auf die im Zusammenhang mit den in der Fig. 1 gezeigten und beschriebenen Komponenten nimmt. Hierbei wird allerdings auf eine Darstellung des bereits in der Fig. 1 gezeigten Körpers 16 des Leuchtsystems 22 verzichtet. Des Weiteren weist in der Fig. 2 bei Vorliegen mehrerer bauteilgleicher Komponenten jeweils nur eine davon ein Bezugszeichen auf. Das Leuchtsystem 22 umfasst neben der gezeigten Leuchtvorrichtung 24 als jeweilige Lichtquellen vier Einkoppeleinrichtungen 25, die beispielsweise als LED-Leuchten ausgebildet sind.

Die Leuchtvorrichtung 24 selbst umfasst mehrere optische Fasern 26a und mehrere weitere Fasern 26b, die als Kett- und/oder Schussfäden zu einem zweidimensionalen Fasergewebe 28 verwebt sind, wie ausschnittsweise auch vergrößert dargestellt ist. Die mehreren weiteren Fasern 26b sind vorliegend auch als optische Fasern ausgebildet. Alternativ oder zusätzlich können diese Fasern auch nichtoptisch sein. Das Fasergewebe 28 ist entsprechend der abgewickelten Oberfläche 18 des dreidimensionalen Körpers 16 gebildet. Hierzu wird das Fasergewebe 28 mittels Schneiden in eine erforderliche Kreuz-Form überführt. Des Weiteren sind miteinander verwebte Fasern 26a, 26b jeweils an vier distalen Schnittenden 30 des Fasergewebes 28 selektiv auftrennt, sodass diese an einem Gewebeende 32 aufgetrennt herausragen. Die aus dem jeweiligen Gewebeende 32 ragenden Fasern 26a, 26b sind jeweils zu einem Faserbündel 34 gebündelt. Jedes der Faserbündel 34 ist von einer Schutzhülle 36 (z.B. Schrumpfschlauch) ummantelt. Des Weiteren weist jedes der Faserbündel 34 an einer Stirnseite ein Koppelelement 38 (Ferrule) zum Einkoppeln von Licht in das Faserbündel 34 auf, d.h. zum optisch leitenden Verbinden des Faserbündels 34 mit der Einkoppeleinrichtung 25.

Um das Fasergewebe 28 zumindest teilweise an der Oberfläche 18 des Körpers 16 anzuordnen, kann es beispielsweise vier schematisch angedeutete Biegekanten 40 aufweisen. Wird das Fasergewebe 28 entlang dieser Biegekanten 40 gefaltet, dann stoßen jeweils zwei Kanten 42a, 42b des Fasergewebes 28 bündig, d.h. überlappungsfrei aneinander. Hierbei kann das Fasergewebe 28 mittels eines Fügematerials (z.B. Klebstoff) an der Oberfläche 18 befestigt sein, das zusätzlich die jeweiligen Fasern 26a, 26b zueinander fixiert. Zusätzlich können auch die aus dem Gewebeende 32 ragenden Fasern 26a, 26b durch die Öffnung 20 in Richtung des Innenraums 17 des Körpers 16 gebogen sein, sodass das Faserbündel 34 durch den Innenraum 17 hindurch zu der Einkoppeleinrichtung 25 geführt ist.

Um das mittels den Einkoppeleinrichtungen 25 eingekoppelte und transportierte Licht seitlich, d.h. in radialer Richtung aus den optischen Fasern 26a, 26b zu emittieren, kann ein einen Kern der Fasern 26a, 26b umhüllender Überzug eine Lücke 44 aufweisen, wie der Übersicht halber nur in dem vergrößerten Ausschnitt des Fasergewebes 28 mittig in einem Hebebereich der Faser 26a gezeigt ist.

Da das Fasergewebe 28 entsprechend der abgewickelten Oberfläche 18 gebildet ist und somit auch unregelmäßig (z.B. unsymmetrisch) ausgebildet sein kann, ergeben sich daraus voneinander unterschiedliche Leuchtbereiche 48, 50a, 50b, 50c. In einem Leuchtbereich 48 weist jeweils nur eine Seite das aus den Fasern 26a gebildete Faserbündel 34 das Koppelelement 38 auf. Licht ist somit nur einseitig einkoppelt. In einem Leuchtbereich 50a weisen zwei einander entgegengesetzt orientierte Seiten jeweils das Faserbündel 34 mit dem Koppelelement 38 auf. Licht kann somit von zwei Seiten jeweils in die Fasern 26a, 26b eingekoppelt sein. Analog hierzu kann in einem Leuchtbereich 50b von drei und in einem Leuchtbereich 50c von vier Seiten Licht eingekoppelt sein.

Ist zusätzlich eine Schutzschicht 46 auf dem Fasergewebe 28 angeordnet (siehe hierzu eine Verkleidung des Wählhebels 14 in einem Griffbereich für den Fahrzeuglenker in der Fig. 1), ist eine partielle Lichtdurchlässigkeit der Schutzschicht 46 notwendig. Diese kann beispielsweise durch eine Materialeigenschaft oder eine Öffnung in der Schutzschicht 46 realisiert sein.

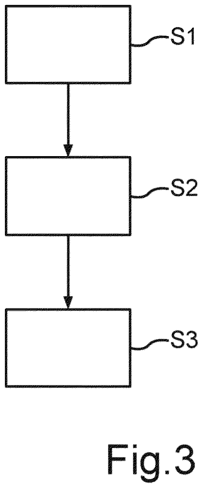

Die Fig. 3 zeigt unter Bezugnahme auf die im Zusammenhang mit den in den Fig. 1 und Fig. 2 gezeigten und beschriebenen Komponenten ein Flussdiagramm für ein Verfahren zum Bereitstellen des Leuchtsystems 22. In einem ersten Schritt S1 des Verfahrens werden die mehreren optischen Fasern 26a und die mehreren weiteren Fasern 26b zu einem zweidimensionalen Fasergewebe verwebt. In einem zweiten Schritt S2 des Verfahrens wird die abgewickelte Oberfläche 18 des Körpers 16 erfasst und abgewickelt. In einem abschließenden dritten Schritt S3 des Verfahrens wird das Fasergewebe 28 entsprechend der abgewickelten Oberfläche 18 des Körpers 16 gebildet. Der zweite Schritt S2 kann zeitlich vor, nach oder zeitgleich mit dem ersten Schritt S1 durchgeführt werden. Insbesondere kann der dritte Schritt S3 zeitlich nach dem ersten Schritt S1 und dem zweiten Schritt S2 erfolgen. Alternativ oder zusätzlich kann vorgesehen sein, dass der erste Schritt S1 und der dritte Schritt S3 kombiniert durchgeführt werden, wobei die abgewickelte Oberfläche 18 des Körpers 16 bereits bei dem Herstellen des Fasergewebes 28 berücksichtigt wird.

Dem Leuchtsystem 22 liegt die Erkenntnis zugrunde, dass eine Lichtinszenierung in dem Kraftfahrzeug 10, insbesondere von einem Interieur (Innenraum 12) zunehmend eine immer wichtigere Rolle spielt. Hierbei kann Licht beispielsweise in einen Bauraum einer Fahrzeugtür, einer Instrumententafel (iTafel) einer Mittelkonsole und/oder eines Fahrzeugsitzes integriert sein. Hierzu kann für eine flächige Lichtanwendung auch eine oberflächenstrukturierte Fasermatte (Fasergewebe 28) verwendet werden, welche neben einem flachen Aufbau (Package) auch eine Verortung einer eigentlichen Lichtquelle (Einkoppeleinrichtung 25) an/in einem alternativen Bauraum zulässt. Ein durch Verwebung erstelltes Textil (Fasergewebe 28) umfasst beispielsweise polymeroptische Schussfäden (jede der mehreren optischen Fasern 26a) und mehrere Polyesterfäden ohne optische Wirkung als Kettfäden (jede der mehreren nichtoptischen Fasern), der ein derartiges Gewirk lediglich stabilisiert. Durch ein Strukturieren der optischen Fasern 26a (POF-Fäden) und eine Lichteinkopplung in einer optischen Schnittstelle (z.B. als Ferrul ausgebildetes Koppelelement 38) kann ein seitlicher Lichtaustritt aus der Fasermatte 28 ermöglicht sein. Die Fassermatte 28 kann auch nur partiell aktiviert werden bzw. können beim Verweben "Löcher" realisiert werden, durch welches die optischen, d.h. lichtführenden Fasern 26a geleitet werden können.

Allerdings ist der Anmelderin aktuell kein Verfahren bekannt, mittels welchem der stark verformte dreidimensionale Körper 16, wie z. B. ein Schalthebel (Ganghebel oder Wählhebel 14) vollflächig zum Leuchten gebracht werden kann. Speziell eine Bauteilgröße bzw. eine bereits integrierte Funktionalität verhindern eine flächige Bauteilbeleuchtung. Bestehende Verfahren benötigen eine erhöhte Aufbauhöhe, welche in einer derartigen Anwendung im Kraftfahrzeug 10 nicht zulässig ist bzw. lassen spritzgegossene Lichtleiter (optische Fasern 26a) eine ausgeprägte Dreidimensionalität nicht zu. Die lichttechnisch aktivierte Fasermatte (Fasergewebe 28 mit Lücke 44) wird in der Regel für eine leicht verformte zweidimensionale Struktur verwendet, wie z. B. für ein Flächenlicht in der Fahrzeugtür oder auf der Instrumententafel.

Um dem entgegenzuwirken, können beim Herstellen der Fasermatte 28 können sowohl Schuss- als auch Kettfäden durch optische polymer Fasern (d.h. die mehreren optische Fasern 26a sowie die als weitere optische Fasern ausgebildeten mehreren weiteren Fasern 26b) verwebt bzw. aktiviert werden und in dem nicht verwebten Bereich, je nach Wunsch mit einem Ferrul (Koppelelement 38) bestückt sein. Durch das vorteilhafte Zerschneiden der Fasermatte 28 erhält man eine flexible zweidimensionale Leuchtfläche, welche sich durch Falten auf jegliche dreidimensionale Form überziehen/verformen lässt. Zusätzlich kann durch ein durchleuchtbares Material (Schutzschicht 44 aus perforiertem Aluminium oder Leder bzw. Folien) hindurch geleuchtet werden. Eine Verortung der Lichtquelle (Einkoppeleinrichtung 25) an der Schnittstelle des Ferruls 38 ist je nach Bauraum aufgrund einer Flexibilität der Fasern 26a, 26b frei wählbar.

Hierdurch kann sich ein sehr geringer Aufbau (z.B. ca. 1 mm für das Fasergewebe 28) ergeben. Des Weitere kann durch Zerschneiden und/oder Verformen von leuchtenden Einzelteilen (d.h. der mehreren optischen Fasern 26a sowie der als weitere optische Fasern ausgebildeten mehreren weiteren Fasern 26b) sowie der Verortung der Einkoppeleinrichtung 25 an einem anderen Verbauort der leuchtende dreidimensionale Körper 16 realisiert sein.

Im Falle des leuchtend ausgestalteten Schalthebels 14 kann hierdurch beispielsweise ein empfohlener Gangwechsel (drehzahlentsprechend), ein Fahrmodus und/oder eine eingelegte Einstellung (z.B. P, D, R,...) dargestellt werden.

Zum Bereitstellen des Leuchtsystems 22 kann wie folgt vorgegangen werden:
- Herstellen der Fasermatte 28
   ∘ Zusätzliches Verweben der bestehenden Fasermatte 28 mit POF-Fasern (mehreren optischen Fasern 26a) und/oder Bereitstellen der bereits die POF-Fasern (mehrere optische Fasern 26a) aufweisenden Fasermatte 28;
   ∘ Herstellen eines zerschnittenen Designs (abgewickelte Oberfläche 18) z.B. durch Laserschneiden (Lasercut);
   ∘ Bündelung einzelner Fasern 26a, 26b in einem Schrumpfschlauch (Faserbündel 34 mit Schutzhülle 36); und
   ∘ Applikation des Ferruls 38.
- Design der Fasermatte 28
   ∘ Konstruktives Übertragen des zu realisierender 3D Körpers 16 mit einer Schicht (Oberfläche 18), die an sinnvollen Stellen getrennt wird, so dass eine in 2D abwickelbare Form (abgewickelte Oberfläche 18) entsteht.
- Integration
   ∘ Umhüllen des 3D Körpers 16 mit der Fasermatte 28 und Umbiegen von Enden der Fasern 26a, 26b, sodass ein enganliegendes Netz um den Körper 16 gespannt ist;
   ∘ Applizieren von einem transluzenten Oberflächenmaterial (Schutzschicht 44) über der Fasermatte 28; und
   ∘ Verlegen des lichttransportierenden Faserbündels 34 an einem bauraumvorteilhaften Bauraum und Einkoppeln des Ferruls 38 an die Einkoppeleinrichtung 25.

Insgesamt zeigen die Beispiele, wie ein dreidimensionaler (3D) Leuchtkörper (Körper 16 mit Fasergewebe 28) für eine Interieuranwendung in einem Automobil (Kraftfahrzeug 10) bereitgestellt werden kann.

## Patentansprüche

1. Leuchtsystem (22) für ein Kraftfahrzeug (10), umfassend
- eine Leuchtvorrichtung (24), mit
- mehreren optischen Fasern (26a) und mehreren weiteren Fasern (26b), wobei die mehreren weiteren Fasern (26b) als mehrere weitere optische Fasern oder als mehrere nichtoptische Fasern ausgebildet sind, wobei
- die mehreren optischen Fasern (26a) und die mehreren weiteren Fasern (26b) zu einem zweidimensionalen Fasergewebe (28) verwebt sind, wobei
- das Fasergewebe (28) entsprechend einer abgewickelten Oberfläche (18) mehrerer Seiten eines vorgegebenen dreidimensionalen Körpers (16) durch Schneiden und durch selektives Auftrennen der miteinander verwebten mehreren optischen Fasern (26a) und der mehreren weiteren Fasern (26b) an einem distalen Schnittende (30) des Fasergewebes (28) gebildet ist, sodass diese an einem Gewebeende (32) aufgetrennt herausragen,
- die aus dem Gewebeende (32) ragenden mehreren optischen Fasern (26a) und/oder die als mehrere weitere optische Fasern ausgebildeten mehreren weiteren Fasern (26b) zu einem Faserbündel (34) gebündelt sind,
- das Faserbündel (34) mit einer Schutzhülle (36) ummantelt ist und an einer Stirnseite ein Koppelelement (38) zum Einkoppeln von Licht in das Faserbündel (34) aufweist,
- das entsprechend der abgewickelten Oberfläche (18) gebildete Fasergewebe (28) zumindest zwei voneinander unterschiedliche Leuchtbereiche (48, 50a, 50b, 50c), welche selektiv ansteuerbar sind, aufweist, wobei
- ein erster Leuchtbereich (48) nur an einer Seite das Faserbündel (34) mit dem Koppelelement (38) aufweist, und
**dadurch gekennzeichnet, dass**
- ein zweiter Leuchtbereich (50a, 50b, 50c) an zumindest zwei Seiten jeweils das Faserbündel (34) mit dem Koppelelement (38) aufweist, wobei zwei der zumindest zwei Seiten einander gegenüberliegen oder normal zueinander angeordnet sind,
- der vorgegebene dreidimensionale Körper(16) eine Oberfläche (18) aufweist, die mehrerer Seiten des Körpers (16) umfasst und den Körper (16) zumindest teilweise begrenzt, wobei
- das Fasergewebe (28) entsprechend der abgewickelten Oberfläche (18) des Körpers (16) gebildet ist, wobei
- das Fasergewebe (28) eine partiell lichtdurchlässige Schutzschicht (46) aufweist, wobei
- die Schutzschicht (46) zumindest teilweise opak ist und zum Bereitstellen der partiellen Lichtdurchlässigkeit eine als Durchgangsöffnung und/oder als eine Sacköffnung ausgebildete Perforation aufweist, wobei
- das Fasergewebe (28) zumindest teilweise an der Oberfläche (18) des Körpers (16) angeordnet ist, wobei hierbei
- das Fasergewebe (28) eine Biegekante (40) und/oder einen Biegewinkel und/oder einen Biegeradius aufweist, und/oder
- mindestens zwei Kanten (42a, 42b) des Fasergewebes (28) bündig aneinander anstoßen, und
- der Körper (16) ein Hohlkörper ist und die Oberfläche (18) des Hohlkörpers eine Öffnung (20) zu einem Innenraum (17) des Hohlkörpers aufweist, wobei
- die aus dem Fasergewebe (28) ragenden mehreren optischen Fasern (26a) und/oder mehreren weiteren Fasern (26b) durch die Öffnung (20) in Richtung des Innenraums (17) des Hohlkörpers gebogen sind, wobei
- das Leuchtsystem eine Einkoppeleinrichtung (25) umfasst, wobei
- das Faserbündel (34) durch den Innenraum (17) zu der Einkoppeleinrichtung (25) geführt und über das Koppelelement (38) mit der Einkoppeleinrichtung (25) optisch leitend verbunden ist.

2. Leuchtsystem (22) nach Anspruch 1, wobei das Fasergewebe (28)
- mittels eines Fügematerials an der Oberfläche (18) des Körpers (16) befestigt ist, wobei zusätzlich die jeweiligen Fasern (26a, 26b) zueinander fixiert sind.

3. Leuchtsystem (22) nach 1 oder 2, wobei
- jede der mehreren optischen Fasern (26a) und/oder jede der der als mehrere weitere optische Fasern ausgebildeten mehreren weiteren optischen Fasern (26b) einen Kern und einen den Kern umhüllenden Überzug umfasst, wobei
- der Überzug eine Lücke (44) aufweist, wobei die Lücke (44) jeweils nur in einem Hebebereich des Fasergewebes (28) angeordnet ist.

4. Kraftfahrzeug (10) mit einem Leuchtsystem (22) nach einem der Ansprüche 1 bis 3, wobei der dreidimensionale Körper (16) als ein Verkleidungselement und/oder als ein Bedienelement (14) in einem Innenraum (12) des Kraftfahrzeugs (10) angeordnet ist.

## Claims

1. A lighting system (22) for a motor vehicle (10), comprising
- a lighting device (24) including
- multiple optical fibers (26a) and multiple further fibers (26b), wherein the multiple further fibers (26b) are formed as multiple further optical fibers or as multiple non-optical fibers, wherein
- the multiple optical fibers (26a) and the multiple further fibers (26b) are woven to a two-dimensional fiber fabric (28), wherein
- the fiber fabric (28) is formed corresponding to a developed surface (18) of multiple sides of a preset three-dimensional body (16) by cutting and by selective separation of the multiple optical fibers (26a) and the multiple further fibers (26b) woven with each other at a distal cut end (30) of the fiber fabric (28), such that they protrude at a fabric end (32) in separated manner,
- the multiple optical fibers (26a) and/or the multiple further fibers (26b) formed as multiple further optical fibers protruding from the fabric end (32) are bundled to a fiber bundle (34),
- the fiber bundle (34) is sheathed with a protective sheath (36) and comprises a coupling element (38) for coupling light into the fiber bundle (34) on an end side,
- the fiber fabric (28) formed corresponding to the developed surface (18) comprises at least two lighting areas (48, 50a, 50b, 50c) different from each other, which are selectively controllable, wherein
- a first lighting area (48) comprises the fiber bundle (34) with the coupling element (38) only on one side, and
**characterized in that**
- a second lighting area (50a, 50b, 50c) respectively comprises the fiber bundle (34) with the coupling element (38) on at least two sides, wherein two of the at least two sides are opposing each other or are arranged normally to each other,
- the preset three-dimensional body (16) comprises a surface (18), which includes multiple sides of the body (16) and at least partially delimits the body (16), wherein
- the fiber fabric (28) is formed corresponding to the developed surface (18) of the body (16), wherein
- the fiber fabric (28) comprises a partially translucent protective layer (46), wherein
- the protective layer (46) is at least partially opaque and comprises a perforation formed as a passage opening and/or as a blind opening for providing the partial translucency, wherein
- the fiber fabric (28) is at least partially arranged on the surface (18) of the body (16), wherein herein
- the fiber fabric (28) comprises a bending edge (40) and/or a bending angle and/or a bending radius, and/or
- at least two edges (42a, 42b) of the fiber fabric (28) abut on each other in flush manner, and
- the body (16) is a hollow body and the surface (18) of the hollow body comprises an opening (20) to an inner space (17) of the hollow body, wherein
- the multiple optical fibers (26a) and/or the multiple further fibers (26b) protruding from the fiber fabric (28) are bent through the opening (20) towards the inner space (17) of the hollow body, wherein
- the lighting system includes a coupling-in device (25), wherein
- the fiber bundle (34) is guided through the inner space (17) to the coupling-in device (25) and connected to the coupling-in device (25) via the coupling element (38) in optically conducting manner.

2. The lighting system (22) according to claim 1, wherein the fiber fabric (28)
- is attached to the surface (18) of the body (16) by means of a joining material, wherein the respective fibers (26a, 26b) are additionally fixed to each other.

3. The lighting system (22) according to claim 1 or 2, wherein
- each of the multiple optical fibers (26a) and/or each of the multiple further optical fibers (26b) formed as the multiple further optical fibers includes a core and a coating enveloping the core, wherein
- the coating comprises a gap (44), wherein the gap (44) is each only arranged in a lifting area of the fiber fabric (28).

4. A motor vehicle (10) with a lighting system (22) according to any one of claims 1 to 3, wherein the three-dimensional body (16) is arranged in an interior (12) of the motor vehicle (10) as a cladding element and/or as an operating element (14).

## Revendications

1. Système d'éclairage (22) pour un véhicule à moteur (10), comprenant :
- un dispositif d'éclairage (24) comportant
- de multiples fibres optiques (26a) et de multiples fibres supplémentaires (26b), les fibres supplémentaires (26b) étant formées comme de multiples fibres optiques supplémentaires ou comme de multiples fibres non optiques,
- les multiples fibres optiques (26a) et les multiples fibres supplémentaires (26b) étant tissées en un tissu de fibres bidimensionnel (28),
- le tissu de fibres (28) étant formé en correspondance avec une surface développée (18) de plusieurs côtés d'un corps tridimensionnel (16) prédéterminé par une découpe et une séparation sélective des multiples fibres optiques (26a) et des multiples fibres supplémentaires (32b) tissées les unes avec les autres à une extrémité de coupe distale (30) du tissu de fibres (28), de sorte que celles-ci font séparément saillie à une extrémité de tissu (32),
- les multiples fibres optiques (26a) et/ou les multiples fibres supplémentaires (26b) formées comme de multiples fibres optiques supplémentaires, qui font saillie à partir de l'extrémité de tissu (32), sont regroupées en un faisceau de fibres (34),
- le faisceau de fibres (34) est enveloppé d'une gaine de protection (36) et comporte un élément de couplage (38) pour coupler la lumière dans le faisceau de fibres (34) sur un côté d'extrémité,
- le tissu de fibres (28) formé en correspondance avec la surface développée (18) comporte au moins deux zones d'éclairage (48, 50a, 50b, 50c) différentes l'une de l'autre, qui peuvent être commandées de façon sélective,
- une première zone d'éclairage (48) comportant le faisceau de fibres (34) avec l'élément de couplage (38) d'un seul côté, et
**caractérisé en ce que**
- une seconde zone d'éclairage (50a, 50b, 50c) comporte respectivement le faisceau de fibres (34) avec l'élément de couplage (38) sur au moins deux côtés, deux des au moins deux côtés étant opposés l'un à l'autre ou agencés orthogonalement l'un à l'autre,
- le corps tridimensionnel (16) prédéterminé comporte une surface (18) qui comprend plusieurs côtés du corps (16) et délimite au moins partiellement le corps (16),
- le tissu de fibres (28) est formé en correspondance avec la surface développée (18) du corps (16),
- le tissu de fibres (28) comportant une couche de protection partiellement translucide (46),
- la couche de protection (46) étant au moins partiellement opaque et comportant une perforation formée comme un orifice de passage et/ou un orifice de poche afin de permettre la translucidité partielle de la lumière,
- le tissu de fibres (28) est agencé au moins partiellement sur la surface (18) du corps (16),
- le tissu de fibres (28) ayant un bord de pliage (40) et/ou un angle de pliage et/ou un rayon de pliage, et/ou
- au moins deux bords (42a, 42b) du tissu de fibres (28) étant en butée l'un contre l'autre de manière affleurante, et
- le corps (16) est un corps creux et la surface (18) du corps creux comporte une ouverture (20) vers un espace intérieur (17) du corps creux,
- les multiples fibres optiques (26a) et/ou les multiples fibres supplémentaires (26b) faisant saillie à partir du tissu de fibres (28) étant pliées à travers l'ouverture (20) en direction de l'espace intérieur (17) du corps creux,
- le système d'éclairage comprenant un dispositif de couplage (25),
- le faisceau de fibres (34) étant guidé jusqu'au dispositif de couplage (25) à travers l'espace intérieur (17) et relié au dispositif de couplage (25) de manière optiquement conductrice par l'intermédiaire de l'élément de couplage (38).

2. Système d'éclairage (22) selon la revendication 1, dans lequel le tissu de fibres (28)
- est fixé à la surface (18) du corps (16) au moyen d'un matériau d'assemblage, les fibres (26a, 26b) respectives étant de plus fixées les unes aux autres.

3. Système d'éclairage (22) selon la revendication 1 ou 2, dans lequel
- chacune des multiples fibres optiques (26a) et/ou chacune des multiples fibres optiques supplémentaires (26b) formées comme des fibres optiques supplémentaires comprend un coeur et un revêtement enveloppant le coeur,
- le revêtement comportant un interstice (44), l'interstice (44) étant respectivement agencé uniquement dans une zone de soulèvement du tissu de fibres (28).

4. Véhicule à moteur (10) ayant un système d'éclairage (22) selon l'une des revendications 1 à 3, dans lequel le corps tridimensionnel (16) est agencé dans un habitacle (12) du véhicule à moteur (10) sous la forme d'un élément de garniture et/ou d'un élément de commande (14).
